# EUROPÄISCHE PATENTSCHRIFT

(11) **EP 4 351 941 B1**
(45) Veröffentlichungstag und Bekanntmachung des Hinweises auf die Patenterteilung: **25.12.2024**
(21) Anmeldenummer: 22730800.4
(22) Anmeldetag: 25.05.2022
(51) Int. Cl.: B60T 15/04

(54) **BREMSANLAGE EINES KRAFTFAHRZEUGS UND VERFAHREN ZUR STEUERUNG DERSELBEN**
VEHICLE BRAKE SYSTEM AND METHOD OF CONTROLLING THE SAME
SYSTÈME DE FREINAGE DE VÉHICULE ET PROCÉDÉ DE CONTRÔLE DU MÊME

(30) Priorität: 07.06.2021 DE 102021114497
(43) Veröffentlichungstag der Anmeldung: 17.04.2024
(73) Patentinhaber: ZF CV Systems Global GmbH, 3006 Bern (CH)
(72) Erfinder: HESEDING, Johannes, 30499 Hannover (DE)
(74) Vertreter: Schäferjohann, Volker
(86) Internationale Anmeldenummer: PCT/EP2022/064230
(87) Internationale Veröffentlichungsnummer: WO 2022/258384

(56) Entgegenhaltungen:
- DE-A1- 102019 216 525
- DE-A1- 19 852 399
- DE-T5- 112007 000 071
- US-A1- 2010 252 378
- US-A1- 2019 299 944
- US-B1- 6 354 671

## Beschreibung

Die Erfindung betrifft eine Bremsanlage eines Kraftfahrzeugs sowie ein Verfahren zur Steuerung dieser Bremsanlage, welches eine Betriebsbremsanlage mit druckmittelbetätigbaren Reibungsbremsen, eine Dauerbremsanlage, ausgebildet als hydrodynamischer oder elektrodynamischer Retarder, mindestens eine mit den Rädern an einer Fahrzeugachse in Triebverbindung stehende, zumindest als Generator betreibbare Elektromaschine, sowie ein mittels eines Bremspedals betätigbares Fußbremsventil aufweist, wobei das Fußbremsventil einen Bremswertgeber und einen Bremspedalaktuator zur Erzeugung einer auf das Bremspedal wirkenden Rückstellkraft aufweist, und bei dem die genannten Komponenten der Bremsanlage mittels eines elektronischen Steuergeräts steuerbar sind, wobei der mittels einer Auslenkung des Bremspedals signalisierte Bremskraftbedarf priorisiert in der Reihenfolge von der Elektromaschine im Generatorbetrieb, von dem Retarder und von der Betriebsbremsanlage befriedigt wird, und wobei die Aufteilung der Bremskraft auf die Komponenten der Bremsanlage einem Fahrer des Kraftfahrzeugs in geeigneter Weise mitgeteilt wird.

Schwere Nutzfahrzeuge verfügen zusätzlich zu einer Betriebsbremsanlage mit druckmittelbetätigten Reibungsbremsen meistens auch über eine verschleißfreie Dauerbremse in Form eines hydrodynamischen oder elektrodynamischen Retarders, mit welcher das Kraftfahrzeug ohne einen Einsatz der Reibungsbremsen verzögert werden kann. Beim Einsatz eines Retarders wird die Bewegungsenergie des betreffenden Fahrzeugs in Wärme umgesetzt, welche durch eine geeignete Kühlvorrichtung in die Umgebungsluft abgeführt wird. Die Bremskraft eines Retarders ist abhängig von der Fahrgeschwindigkeit des Fahrzeugs beziehungsweise von der Drehzahl der Triebwelle, zum Beispiel einer Getriebeausgangswelle eines Schaltgetriebes, mit der ein Rotor des Retarders in Triebverbindung steht. Die nutzbare Bremskraft eines Retarders ist durch die abführbare Wärmemenge begrenzt, sodass die Zuschaltung der Reibungsbremsen erforderlich sein kann, um eine Überhitzung des Retarders zu vermeiden. Zudem kann ein Kraftfahrzeug mit einem Retarder nicht bis zum Stillstand abgebremst werden, sodass die Reibungsbremsen spätestens nach Erreichen oder Unterschreiten einer Mindestfahrgeschwindigkeit zugeschaltet werden müssen.

Mit der zunehmenden Elektrifizierung von Fahrzeugen werden auch Nutzfahrzeuge als reine Elektrofahrzeuge oder Hybridfahrzeuge jeweils mit mindestens einer Elektromaschine ausgestattet, welche mit den Rädern an einer Fahrzeugachse in Triebverbindung steht, als Motor und als Generator betreibbar ist, und somit im Generatorbetrieb ebenfalls als verschleißfreie Dauerbremse nutzbar ist. Im Generatorbetrieb einer Elektromaschine wird die Bewegungsenergie des Fahrzeugs in elektrische Energie umgewandelt, welche in einem sogenannten Rekuperationsbetrieb zum Aufladen eines elektrischen Energiespeichers genutzt werden kann. Bei einer Elektromaschine ist die nutzbare Bremskraft zum einen durch die abführbare Wärmemenge und zum anderen durch die Kapazität des Energiespeichers begrenzt, weshalb die Zuschaltung des Retarders und/oder der Reibungsbremsen erforderlich sein kann, um eine Überhitzung der Elektromaschine oder eine Überladung des Energiespeichers zu vermeiden.

Bei einer elektronisch steuerbaren Bremsanlage mit einer integrierten Dauerbremse der gerade beschriebene Art wird die von einem Fahrer über eine Auslenkung des Bremspedals angeforderte und mittels einen am Fußbremsventil angeordneten Bremswertgeber erfasste Abbremsbedarf in Abhängigkeit von einer festgelegten Prioritätsreihenfolge und aktuellen Betriebsparametern, wie der Fahrgeschwindigkeit, der Betriebstemperatur des Retarders oder der Elektromaschine sowie dem Ladezustand des elektrischen Energiespeichers auf die Bremsanlage aufgeteilt (Brake Blending). Dabei ist die Prioritätsreihenfolge meistens derart festgelegt, dass bei einem Bremsvorgang zuerst die Elektromaschine im Generatorbetrieb zur Verzögerung des Fahrzeugs genutzt wird, um den elektrischen Energiespeicher aufzuladen, dass dann bedarfsweise der Retarder zugeschaltet wird, und dass zuletzt bedarfsweise die Betriebsbremsanlage mit den Reibungsbremsen zur Verzögerung des Fahrzeugs genutzt wird. Da der Fahrer des Kraftfahrzeugs unabhängig von der Aufteilung der Bremskraft auf die genannten Komponenten der Bremsanlage jeweils denselben Verlauf der Widerstandskraft am Bremspedal erwartet, ist üblicherweise ein Bremspedalaktuator vorhanden, welcher mit dem Bremspedal in Wirkverbindung steht, und mittels dem jeweils eine Rückstellkraft erzeugt und in das Bremspedal eingeleitet wird. Diese Rückstellkraft ist derart bemessen, dass sich zusammen mit innerhalb des Fußbremsventils erzeugten Widerstandskräften, wie der Federkraft einer auf das Bremspedal wirkenden Rückstellfeder und/oder der auf einen Steuerkolben wirksamen Druckkraft des Druckmittels, eine der gesamten Bremskraft entsprechende Widerstandskraft am Bremspedal einstellt.

Aus der DE 11 2007 000 071 B4 ist eine Bremsanlage eines Hybridfahrzeugs bekannt, die eine Betriebsbremsanlage mit hydraulisch betätigbaren Reibungsbremsen und mit den Rädern einer Fahrzeugachse in Triebverbindung stehende, als Motoren und als Generatoren betreibbare Elektromaschinen sowie ein über ein Bremspedal betätigbares Fußbremsventil und einen an einer Hauptbremsleitung angeschlossenen, als Drucksensor ausgebildeten Bremswertgeber umfasst. Der Antriebsstrang des Hybridfahrzeugs weist einen Verbrennungsmotor auf, der mit einem elektrischen Generator gekoppelt ist. Von den Elektromaschinen wird das Hybridfahrzeug im Motorbetrieb angetrieben und im Generatorbetrieb abgebremst. Die im Generatorbetrieb von den Elektromaschinen erzeugte elektrische Energie wird in einem Wärmestrahler in Wärme umgesetzt und an die Umgebungsluft abgegeben. Bei Bremsvorgängen wird das Hybridfahrzeug in Abhängigkeit von der Auslenkung des Bremspedals zusätzlich zu den Reibungsbremsen der Betriebsbremsanlage auch durch die als Generatoren betriebenen Elektromaschinen verzögert. Bei Bremsvorgängen mit geringer Auslenkung des Bremspedals ist dagegen vorgesehen, dass das Hybridfahrzeug nur mit den Reibungsbremsen der Betriebsbremsanlage abgebremst wird, um eine genaue Dosierbarkeit der Bremskraft zu gewährleisten.

In der US 2004/0251095 A1 ist eine Bremsanlage eines Elektrofahrzeugs beschrieben, welche eine Betriebsbremsanlage mit hydraulisch betätigbaren Reibungsbremsen und eine mit den Rädern einer Fahrzeugachse in Triebverbindung stehende, als Motor und als Generator betreibbare Elektromaschine sowie ein über ein Bremspedal betätigbares Hauptbremsventil, einen an einem Bremshebel des Bremspedals angeordneten Bremswertgeber und einen Bremspedalaktuator zur Erzeugung einer auf das Bremspedal wirksamen Rückstellkraft umfasst. Der Bremspedalaktuator ist in einer ersten Ausführung als ein Elektromotor ausgebildet, der über ein Zahnstangengetriebe mit dem Bremshebel in Stellverbindung steht. In einer zweiten Ausführung ist der Bremspedalaktuator als ein hydraulischer oder pneumatischer Stellzylinder ausgebildet, dessen Kolbenstange mit dem Bremshebel in Stellverbindung ist. Bei Bremsvorgängen wird die über die Auslenkung des Bremspedals angeforderte Bremskraft zwischen den Reibungsbremsen der Betriebsbremsanlage und der als Generator betriebenen Elektromaschine aufgeteilt. Dabei wird mittels des Bremspedalaktuators eine Rückstellkraft erzeugt und in den Bremshebel eingeleitet, welche dem generatorisch erzeugten Anteil der Bremskraft entspricht, sodass der Fahrer am Bremspedal dieselbe Rückstellkraft wie bei einem rein hydraulisch bewirkten Bremsvorgang wahrnimmt.

In der DE 10 2012 209 157 A1 ist eine Bremsanlage eines Elektro- oder Hybridfahrzeugs offenbart, welche eine Betriebsbremsanlage mit druckmittelbetätigten Reibungsbremsen und mindestens eine mit den Rädern einer Fahrzeugachse in Triebverbindung stehende, als Motor und als Generator betreibbare Elektromaschine sowie ein mittels eines Bremspedals betätigbares Fußbremsventil mit einem Bremswertgeber und einem Bremspedalaktuator zur Erzeugung einer auf das Bremspedal wirksamen Rückstellkraft umfasst. Bei Bremsvorgängen wird das Kraftfahrzeug zunächst durch die als Generator betriebene Elektromaschine verzögert. Bevor die Elektromaschine ihr maximales Bremsmoment erreicht, wird die Betriebsbremsanlage mit den Reibungsbremsen aktiviert. In einer Regelungseinrichtung wird in Abhängig von der Auslenkung des Bremspedals und des maximal oder aktuell verfügbaren oder rekuperierbaren Bremsmomentes der Elektromaschine eine Rückstellkraft bestimmt, welche mittels des Bremspedalaktuators eingestellt wird. Bevor die Elektromaschine ihr maximales Bremsmoment erreicht, wird die Betriebsbremsanlage mit den Reibungsbremsen zugeschaltet, welches dem Fahrer des Fahrzeugs über eine erhöhte Rückstellkraft am Bremspedal zur Kenntnis gebracht wird.

Aus der DE 10 2018 114 848 A1 ist ein Fußbremsventil einer elektronisch steuerbaren Druckluftbremsanlage bekannt, welches einen als Wegsensor ausgebildeten Bremswertgeber und einen elektropneumatischen Bremspedalaktuator zur Erzeugung einer auf das Bremspedal wirksamen Rückstellkraft aufweist. Der Bremspedalaktuator ist mit einem offenen Druckraum, welcher über ein Einlassventil belüftbar und über ein Auslassventil entlüftbar ist, benachbart zu einem Federteller an das Gehäuse des Fußbremsventils angeflanscht. Der Federteller ist axial verschiebbar in dem Gehäuse des Fußbremsventils geführt und dient primär zur Abstützung einer Rückstellfeder, an der gegenüberliegend ein über das Bremspedal axial verschiebbarer Stößelkolben anliegt. Über den Bremspedalaktuator kann eine abschnittsweise oder stufenweise erhöhte Rückstellkraft in das Bremspedal eingeleitet werden. Bei einem Bremsvorgang mit aktivierter ABS-Regelung können über den Bremspedalaktuator Druckimpulse in das Bremspedal eingeleitet werden, welche von dem Fahrer als Vibration wahrnehmbar sind und die aktuell wirksame ABS-Regelung anzeigen sollen.

In einem Kraftfahrzeug mit einer Bremsanlage, welche eine Betriebsbremsanlage mit Reibungsbremsen, einen Retarder und mindestens eine als Generator betreibbare Elektromaschine umfasst, kann dem Fahrer während eines Bremsvorgangs die Aufteilung der Bremskraft auf die Komponenten der Bremsanlage beispielsweise in einem Display im Armaturenbrett angezeigt werden. Der Fahrer kann den Bremsvorgang dann über die Betätigung des Bremspedals derart beeinflussen, dass zum Beispiel die Betätigung der Reibungsbremsen der Betriebsbremsanlage und damit ein Verschleiß der Reibbeläge sowie der Bremsscheiben oder Bremstrommeln vermieden wird. Da der Fahrer während eines starken Bremsvorgangs den Blick aber nicht von dem vor ihm liegenden Verkehrsraum nehmen sollte, um das Kraftfahrzeug auf der Fahrbahn zu halten, einen Aufprall auf ein anderes Kraftfahrzeug zu verhindern oder ein Hindernis zu umfahren, ist zusätzlich eine haptisch am Bremspedal fühlbare Information über die aktuelle Aufteilung der Bremskraft wünschenswert.

Der vorliegenden Erfindung liegt daher die Aufgabe zugrunde, ein Verfahren zur Steuerung einer Bremsanlage eines Kraftfahrzeugs der eingangs genannten Art vorzustellen, mit welchem dem Fahrer die Aufteilung seines Bremswunsches auf die Komponenten der Bremsanlage in geeigneter Weise mitgeteilt werden kann. Außerdem soll eine Bremsanlage dargestellt und beschrieben werden, mit dem das genannte Verfahren betrieben werden kann.

Die Lösung der verfahrensbezogenen Aufgabe ist durch ein Verfahren mit den Merkmalen des Anspruchs 5 gelöst. Die Merkmale des unabhängigen Vorrichtungsanspruchs (Anspruch 1) kennzeichnen eine Bremsanlage, welches die vorrichtungsbezogene Aufgabe löst. Vorteilhafte Ausgestaltungen und Weiterbildungen sind in den jeweils zugeordneten abhängigen Ansprüchen definiert.

Es wird eine Bremsanlage eines Kraftfahrzeugs beansprucht, welche eine Betriebsbremsanlage mit druckmittelbetätigbaren Reibungsbremsen, eine Dauerbremsanlage, ausgebildet als hydrodynamischer oder elektrodynamischer Retarder, mindestens eine mit den Rädern an einer Fahrzeugachse in Triebverbindung stehende, zumindest als Generator betreibbare Elektromaschine, sowie ein mittels eines Bremspedals betätigbares Fußbremsventil aufweist, wobei das Fußbremsventil einen Bremswertgeber und einen Bremspedalaktuator zur Erzeugung einer auf das Bremspedal wirkenden Rückstellkraft aufweist, und bei dem die genannten Komponenten der Bremsanlage mittels eines elektronischen Steuergeräts steuerbar sind, wobei der signalisierte Bremskraftbedarf priorisiert in der Reihenfolge von der Elektromaschine im Generatorbetrieb, von dem Retarder und von der Betriebsbremsanlage befriedigt wird, und wobei die Aufteilung der Bremskraft auf die Komponenten der Bremsanlage einem Fahrer des Kraftfahrzeugs in geeigneter Weise mitteilbar ist.

Zur Lösung der vorrichtungsbezogenen Aufgabe ist bei dieser Bremsanlage vorgesehen, dass der Bremspedalaktuator elektrisch wirksam ausgebildet ist und ein drehbares oder axial verschiebbares Triebelement aufweist, und dass das Triebelement des Bremspedalaktuators unmittelbar oder mittelbar mit einem Bremshebel des Bremspedals oder mit einem Stößelkolben des Fußbremsventils in Stellverbindung ist.

In einer bevorzugten Ausführungsform wird der Bremskraft mittels einer Auslenkung des Bremspedals signalisiert. In einer anderen bevorzugten Ausführungsform wird der Bremskraftbedarf wird automatisch durch den elektronisch geregelten Bremsanforderungen signalisiert. Beispielsweise in den fortschrittlichen Bremsanlagen wie ESP (Electronic Stability Program), ESC (Electronic Stability Control), ASR (Anti-Slip Regulation) kann die Fahrzeug-verzögerung und/oder Bremskraftbedarf unabhängig vom Fahrerbremswünsch, der mittels einer Auslenkung des Bremspedals gegeben ist, kontrolliert oder kalibriert werden.

Diese elektrisch wirksame Ausbildung des Bremspedalaktuators hat gegenüber den aus dem Stand der Technik bekannten Ausführungen als hydraulischer oder pneumatischer Stellzylinder die Vorteile eines besseren beziehungsweise schnelleren Ansprechverhaltens und einer genaueren Dosierbarkeit der Rückstellkraft und der auf das Bremspedal einwirkenden Signalkraft.

Gemäß einer ersten Weiterbildung dieser Bremsanlage ist vorgesehen, dass der Bremspedalaktuator als ein Elektromotor mit einer drehbaren Rotorwelle ausgebildet ist. Die Rotorwelle des Elektromotors ist hierbei über ein Spindelgetriebe unmittelbar oder mittelbar mit dem Bremshebel des Bremspedals oder mit dem Stößelkolben des Fußbremsventils verbunden.

Alternativ dazu kann vorgesehen sein, dass der Bremspedalaktuator als ein Elektromagnet mit einem axial verschiebbaren Anker ausgebildet ist, wobei der Anker des Elektromagneten unmittelbar oder mittelbar mit dem Bremshebel des Bremspedals oder mit dem Stößelkolben des Fußbremsventils in Stellverbindung ist.

Demnach betrifft die Erfindung zunächst ein Verfahren zur Steuerung einer Bremsanlage eines Kraftfahrzeugs, welches eine Betriebsbremsanlage mit druckmittelbetätigbaren Reibungsbremsen, eine Dauerbremsanlage, ausgebildet als hydrodynamischer oder elektrodynamischer Retarder, mindestens eine mit den Rädern an einer Fahrzeugachse in Triebverbindung stehende, zumindest als Generator betreibbare Elektromaschine, sowie ein mittels eines Bremspedals betätigbares Fußbremsventil aufweist, wobei das Fußbremsventil einen Bremswertgeber und einen Bremspedalaktuator zur Erzeugung einer auf das Bremspedal wirkenden Rückstellkraft aufweist, und bei dem die genannten Komponenten der Bremsanlage mittels eines elektronischen Steuergeräts steuerbar sind, wobei der mittels einer Auslenkung des Bremspedals signalisierte Bremskraftbedarf priorisiert in der Reihenfolge von der Elektromaschine im Generatorbetrieb, von dem Retarder und von der Betriebsbremsanlage befriedigt wird, und wobei die Aufteilung der Bremskraft auf die Komponenten der Bremsanlage einem Fahrer des Kraftfahrzeugs in geeigneter Weise mitgeteilt wird.

Zur Lösung der verfahrensbezogenen Aufgabe ist bei dieser Bremsanlage vorgesehen, dass bei mindestens einer Änderung der Aufteilung der Bremskraft auf die Komponenten der Bremsanlage mittels des Bremspedalaktuators die auf das Bremspedal wirkende Rückstellkraft kurzzeitig mit einer haptisch wahrnehmbaren Signalkraft überlagert wird.

Von Vorteil ist hierbei, dass der Fahrer des Kraftfahrzeugs nur über einen sehr kurzen Zeitraum über eine Änderung der Aufteilung der Bremskraft auf die Komponenten der Bremsanlage informiert wird, also keine dauerhafte Änderung der auf das Bremspedal wirkenden Rückstellkraft spürbar ist. Da diese Informationsvermittlung zudem über das Bremspedal auf den Fuß des Fahrers wirkt, kann dieser seine Augen weiter konzentriert auf den vor ihm liegenden Verkehrsraum richten.

Gemäß einer ersten Weiterbildung des beschriebenen Verfahrens ist vorgesehen, dass bei einer Zuschaltung oder einer Abschaltung wenigstens einer der Komponenten der Bremsanlage mittels des Bremspedalaktuators die auf das Bremspedal wirkende Rückstellkraft kurzzeitig mit einer haptisch wahrnehmbaren Signalkraft überlagert wird. Auch bei dieser Verfahrensvariante gelten die gerade genannten Vorteile. Allerdings wird der Fahrer bei dieser Weiterbildung des Verfahrens nur dann mittels der zusätzlich auf das Bremspedal wirkenden Signalkraft informiert, wenn eine der Komponenten der Bremsanlage vollständig zugeschaltet oder vollständig abgeschaltet wird.

Durch das Erzeugen einer haptisch wahrnehmbaren Signalkraft mittels des Bremspedalaktuators und deren Einleiten in das Bremspedal wird der Fahrer des Kraftfahrzeugs über eine gerade stattfindende beziehungsweise gerade erfolgte Änderung der Aufteilung der Bremskraft auf die Komponenten der Bremsanlage informiert. Also beispielsweise über die Zuschaltung oder Abschaltung der Elektromaschine in deren generatorischen Betrieb, des Retarders oder der Betriebsbremsanlage. Da dem Fahrer diese Information über das Bremspedal in seinen Fuß signalisiert wird, braucht dieser zur Kenntnisnahme der Information seinen Blick nicht von dem vor ihm liegenden Verkehrsraum abwenden. In Reaktion auf die Signalkraft kann der Fahrer über eine entsprechende Betätigung des Bremspedals die Aufteilung der Bremskraft auf die erwähnten Komponenten der Bremsanlage beeinflussen. So kann er beispielsweise während des elektrischen Bremsens im Generatorbetrieb der Elektromaschine durch ein leichtes Lösen des Bremspedals energetisch sinnvoll die Zuschaltung des Retarders verhindern, sofern die Verkehrssituation eine geringere Bremsverzögerung zulässt.

Hierbei kann es für die Wahrnehmbarkeit der aktuellen Aufteilung der Bremskraft auf die Komponenten der Bremsanlage vor Vorteil sein, wenn die die Rückstellkraft am Bremspedal verändernde Signalkraft als mindestens eine impulsförmige Erhöhung der Rückstellkraft wirksam ist.

Um während eines Bremsvorgangs eine Unterscheidung zwischen dem Zuschalten und dem Abschalten der Komponenten der Bremsanlage zu ermöglichen, ist bevorzugt vorgesehen, dass sich bei unterschiedlichen Änderungen der Aufteilung der Bremskraft eingesteuerten impulsförmigen Signalkräfte hinsichtlich ihrer Anzahl und/oder Stärke und/oder Dauer voneinander unterscheiden. Hierauf wird noch bei der Erläuterung eines Ausführungsbeispiels eingegangen.

Gemäß einer weiteren Verfahrensvariante ist vorgesehen, dass die Signalkraft in Form einer am Bremspedal als Vibration spürbaren, mehrere Schwingungen der Rückstellkraft umfassenden Schwingungssequenz eingesteuert wird. Bei dieser Ausführung der Signalkraft können sich die bei unterschiedlichen Änderungen der Aufteilung der Bremskraft eingesteuerten Schwingungssequenzen hinsichtlich ihrer Frequenz und/oder Amplitude und/oder Dauer voneinander unterscheiden.

Selbstverständlich können die genannten Verfahrensvarianten auch in Kombination zur Anwendung kommen, beispielsweise derart, dass die Zuschaltung oder Abschaltung mindestens einer Komponente der Bremsanlage, beispielsweise der generatorisch betreibbaren Elektromaschine, über eine Signalkraft in Form mindestens einer impulsförmigen Erhöhung der Rückstellkraft signalisiert wird. Im Unterschied dazu wird die Zuschaltung oder Abschaltung einer anderen Komponente der Bremsanlage, beispielsweise der Betriebsbremsanlage mit den Reibungsbremsen, über eine Signalkraft in Form einer als Vibration spürbaren, mehrere Schwingungen der Rückstellkraft umfassende Schwingungssequenz dem Fahrer zur Kenntnis gebracht.

Das Verfahren und die Bremsanlage mit den Merkmalen der Erfindung werden nachstehend anhand eines in der beigefügten Zeichnung dargestellten Ausführungsbeispiels anschaulich erläutert. In der Zeichnung zeigt
Fig. 1 in einer schematischen Ansicht ein Kraftfahrzeug mit einer Bremsanlage, welches die Merkmale der Erfindung aufweist, und
Fig. 2 ein Kraft-Zeit-Diagramm, in welchem der Verlauf eines Bremsvorgangs mit einer Anwendung des erfindungsgemäßen Steuerungsverfahrens veranschaulicht ist.

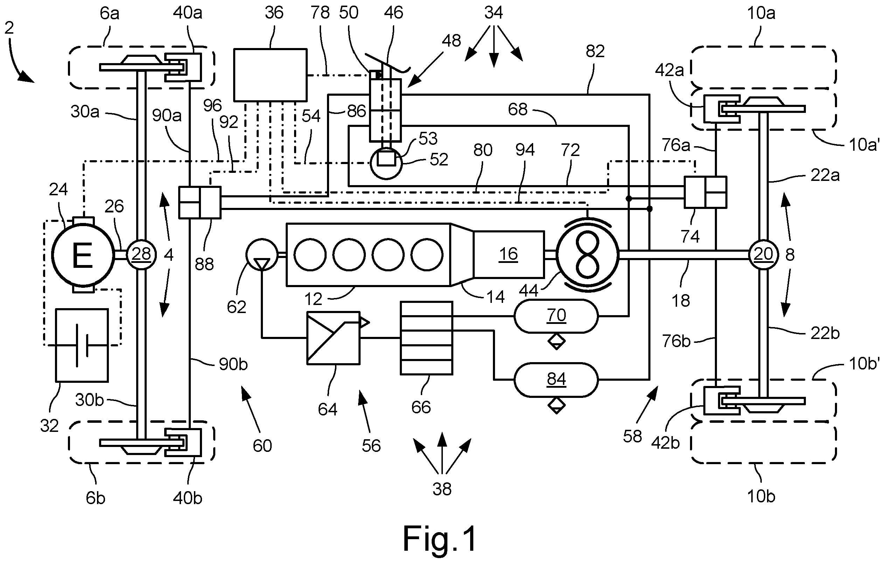

Das in Fig. 1 abgebildete Kraftfahrzeug 2, bei dem es sich um ein Nutzfahrzeug handelt, weist eine einfachbereifte Vorderachse 4 mit zwei Rädern 6a, 6b und eine doppeltbereifte Hinterachse 8 mit insgesamt bspw. vier Rädern 10a, 10a', 10b, 10b' auf. Das Kraftfahrzeug 2 kann wahlweise oder gemeinsam von einem Verbrennungsmotor 12 und/oder von einer wahlweise als Motor oder Generator betreibbaren Elektromaschine 24 angetrieben werden. Der Verbrennungsmotor 12 steht über eine Trennkupplung 14, ein Schaltgetriebe 16, eine Kardanwelle 18, ein erstes Achsdifferential 20 und jeweils eine Antriebswelle 22a, 22b mit den Rädern 10a, 10a', 10b, 10b' der Hinterachse 8 in Antriebsverbindung. Die Elektromaschine 24 steht über eine Triebwelle 26, ein zweites Achsdifferential 28 und jeweils eine Antriebswelle 30a, 30b mit den Rädern 6a, 6b der Vorderachse 4 in Antriebsverbindung. Im Motorbetrieb wird die Elektromaschine 24 aus einem zugeordneten elektrischen Energiespeicher 32 mit elektrischer Energie versorgt. Im generatorischen Betrieb wird die Elektromaschine 24 bevorzugt zum Laden des Energiespeichers 32 genutzt.

Die Bremsanlage 34 des Kraftfahrzeugs 2 ist elektronisch steuerbar und umfasst neben einem elektronischen Steuergerät 36 eine Betriebsbremsanlage 38 mit druckmittelbetätigbaren, als Reibungsbremsen ausgeführten Radbremsen 40a, 40b, 42a, 42b, eine Dauerbremsanlage oder Sekundärbremse 44 in Form eines hydrodynamischen oder elektrodynamischen Retarders, die mit den Rädern 6a, 6b der Vorderachse 4 in Antriebsverbindung stehende Elektromaschine 24, sowie ein mittels eines Bremspedals 46 betätigbares Fußbremsventil 48 mit einem als Stellwegsensor ausgeführten Bremswertgeber 50 und einem Bremspedalaktuator 52 direkt oder indirekt verbindbar ist. Der Bremspedalaktuator 52 dient zur Erzeugung einer auf das Bremspedal 46 wirkenden Rückstellkraft. Er ist zu seiner Ansteuerung über eine elektrische Steuerleitung 54 mit dem elektronischen Steuergerät 36 verbunden.

An dem Bremspedalaktuator 52 ist ein axial oder rotatorisch wirkendes Triebelement 53 angeordnet, mittels dem zusätzlich zu der erwähnten Rückstellkraft eine Signalkraft auf das Bremspedal 46 ausgeübt werden kann.

Die Betriebsbremsanlage 38 ist als eine Druckluftbremsanlage ausgeführt und weist eine Druckluftversorgungseinrichtung 56 und zwei Bremskreise 58, 60 auf. Die Druckluftversorgungseinrichtung 56 umfasst einen Kompressor 62, einen Druckregler 64 und ein Mehrkreisschutzventil 66. Von dem Kompressor 62, der von dem Verbrennungsmotor 12 antreibbar ist. Mittels des Kompressors 62 wird Druckluft über den Druckregler 64 und das Mehrkreisschutzventil 66 in die beiden Bremskreise 58, 60 gefördert.

Der erste Bremskreis 58 weist einen ersten Druckspeicher 70 und eine erste Vorratsleitung 68 auf, welche von dem Mehrkreisschutzventil 66 zu dem Fußbremsventil 48 führt. An dem Fußbremsventil 48 ist eine erste Achsbremsleitung 72 angebunden, in welche abhängig von der Betätigung des Bremspedals 46 ein Bremsdruck eingesteuert wird. Die erste Achsbremsleitung 72 führt einem ersten Achsventilmodul 74 an der Hinterachse 8.

Das erste Achsventilmodul 74 umfasst ein Relaisventil und jeweils vorzugsweise eine nicht dargestellte ABS-Ventilanordnung pro Radpaar 10a, 10a'; 10b, 10b' der Hinterachse 8. Es wird darauf hingewiesen, dass die Anwesenheit der ABS-Ventilanordnung des ersten Achsventilmoduls 74 nur eine optionale Ausführung ist, insbesondere wenn das erste Achsventilmodul 74 als elektronisch ansteuerbare Ventilmodul ausgebildet worden ist. Von dem ersten Achsventilmodul 74 ist jeweils eine Radbremsleitung 76a, 76b an die zugeordnete Radbremse 42a, 42b der Hinterachse 8 geführt. Das Relaisventil des ersten Achsventilmoduls 74 wird primär in Abhängigkeit von dem mittels des Bremswertgebers 50 des Fußbremsventils 48 erfassten Bremswert elektronisch gesteuert. Hierzu ist der Bremswertgeber 50 über eine elektrische Sensorleitung 78 und das erste Achsventilmodul 74 über eine elektrische Steuerleitung 80 mit dem elektronischen Steuergerät 36 verbunden. Im Redundanzfall, also bei ausgefallener elektronischer Steuerung, wird das Relaisventil des ersten Achsventilmoduls 74 in Abhängigkeit des in der Achsbremsleitung 72 anliegenden Bremsdruckes pneumatisch gesteuert.

Der zweite Bremskreis 60 weist eine zweite Vorratsleitung 82 und einen zweiten Druckspeicher 84 auf, wobei die zweite Vorratsleitung 82 von dem Mehrkreisschutzventil 66 über den zweiten Druckspeicher 84 zu dem Fußbremsventil 48 geführt ist. Von dem Fußbremsventil 48 verläuft eine zweite Achsbremsleitung 86, in die abhängig von der Betätigung des Bremspedals 46 ein Bremsdruck eingesteuert wird, zu einem zweiten Achsventilmodul 88. Dieses zweite Achsventilmodul 88 umfasst ebenfalls ein nicht dargestelltes Relaisventil und jeweils eine ABS-Ventilanordnung pro Rad 6a, 6b der Vorderachse 4. Von den ABS-Ventilanordnungen des zweiten Achsventilmoduls 88 ist jeweils eine Radbremsleitung 90a, 90b an die zugeordnete Radbremse 40a, 40b der Vorderachse 4 geführt. Das Relaisventil des zweiten Achsventilmoduls 88 wird ebenfalls primär in Abhängigkeit von dem mittels des Bremswertgebers 50 des Fußbremsventils 48 erfassten Bremswert elektronisch gesteuert und ist hierzu über eine elektrische Steuerleitung 92 mit dem elektronischen Steuergerät 36 verbunden. Im Redundanzfall wird das Relaisventil des zweiten Achsventilmoduls 88 ebenfalls in Abhängigkeit des in der zweiten Achsbremsleitung 86 anliegenden Bremsdruckes pneumatisch gesteuert.

Der Retarder 44 ist mit einer Ausgangswelle des Schaltgetriebes 16 antriebsverbunden und steht über die Kardanwelle 18, das Achsdifferential 20 und die Antriebswellen 22a, 22b mit den Rädern 10a, 10a', 10b. 10b' der Hinterachse 8 in Antriebsverbindung. Zur elektronischen Steuerung ist der Retarder 44 über eine elektrische Steuerleitung 94 mit dem elektronischen Steuergerät 36 verbunden. Ebenso steht die Elektromaschine 24 über eine elektrische Steuerleitung 96 mit dem elektronischen Steuergerät 36 in Verbindung.

Bei einem Bremsvorgang wird die von dem Fahrer gewünschte Bremsverzögerung, welche bei einer Betätigung des Bremspedals 46 dem von dem Bremswertgeber 50 erfassten Bremswert entspricht, in dem elektronischen Steuergerät 36 auf die Komponenten der Bremsanlage 34 aufgeteilt. Diese sind wie erwähnt die Betriebsbremsanlage 38, der Retarder 44 und die Elektromaschine 24 im Generatorbetrieb, wobei die Aufteilung der Bremskraft priorisiert in der Reihenfolge Elektromaschine 24, Retarder 44 und Betriebsbremsanlage 38 erfolgt.

Hierdurch wird das Kraftfahrzeug 2 zunächst mit der als Generator betriebenen Elektromaschine 24 unter teilweiser Rückgewinnung der kinetischen Energie des Kraftfahrzeugs 2 und Aufladung des elektrischen Energiespeichers 32 (Rekuperation) verschleißfrei abgebremst. Danach wird das Kraftfahrzeug 2 mit dem Retarder 44 verschleißfrei weiter abgebremst, bevor die Reibungsbremsen 40a, 40b, 42a, 42b der Betriebsbremsanlage 38 betätigt werden. In einer bevorzugten Ausführungsform ist auch vorstellbar, wobei die Aufteilung bzw. die Ablaufplanung oder die Sequenzierung oder Priorisierung in Bezug auf den Einsatz der Bremskraft von den erwähnten Bremskomponenten (Betriebsbremsanlage 38, der Retarder 44 und die Elektromaschine 24 im Generatorbetrieb) abhängig von dem festgestellten Fahrerbremswünsch (durch bspw. den elektronischen Steuergerät 36) entscheidet ist. Da der Fahrer am Bremspedal 46 bei einer bestimmten Auslenkung des Bremspedals 46 unabhängig von der Aufteilung der Bremskraft auf die Komponenten 24, 38, 44 der Bremsanlage 34 die weitgehend selbe Widerstandskraft F_{BP} wahrnehmen soll, wird in einer bevorzugten Ausführungsform mittels des axial oder rotatorisch wirkenden Triebelements 53 am Bremspedalaktuator 52 eine entsprechende Rückstellkraft in Form einer Signalkraft erzeugt und in das Bremspedal 46 eingeleitet.

In einer anderen bevorzugten Ausführungsform wird ein Feedback an Fahrer durch einen erhöhten Widerstandsgefühl oder einen Widerstandkraft am Bremspedal 46 oder am Fußbremsventil 48 gegeben, wenn der Fahrer am Bremspedal 46 oder am Fußbremsventil 48 bei einer bestimmten Auslenkung des Bremspedals 46 über die Aufteilung der Bremskraft auf die Komponenten 24, 38, 44 informiert werden soll oder muss. Hierbei sollte man berücksichtigen, dass die Auslenkung des Bremspedals 46 nicht immer eine gewünschte Fahrzeugverzögerung reflektiert wird. Bspw. in den fortschrittlichen Bremsanlagen wie ESP (Electronic Stability Program), ESC (Electronic Stability Control), ASR (Anti-Slip Regulation) kann die Fahrzeugverzögerung und/oder Bremskraftbedarf unabhängig vom Fahrerbremswünsch kontrolliert werden.

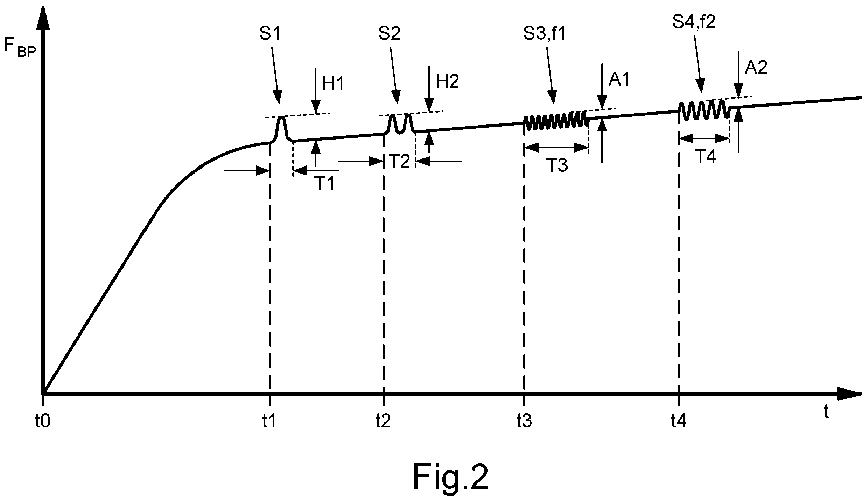

Um den Fahrer gegebenenfalls zusätzlich zu einer optischen Anzeige in einem Display im Armaturenbrett des Kraftfahrzeugs 2 über die Aufteilung der Bremskraft auf die Komponenten 24, 38, 44 der Bremsanlage 34 zu informieren, ist erfindungsgemäß vorgesehen, dass bei mindestens einer Änderung der Aufteilung der Bremskraft auf die Komponenten 24, 38, 44 der Bremsanlage 34, beispielsweise bei der Zuschaltung und/oder Abschaltung einer der Komponenten 24, 38, 44 der Bremsanlage 34, der Rückstellkraft mittels des Bremspedalaktuator 52 eine kurzzeitige, haptisch am Fuß des Fahrers wahrnehmbare Signalkraft überlagert wird. Wie dies bevorzugt erfolgt, ist beispielhaft in dem Diagramm von Fig. 2 dargestellt.

In dem Diagramm der Fig. 2 ist der Verlauf der auf das Bremspedal 46 wirkenden Widerstandskraft F_{BP} über die Zeit t während eines Bremsvorgangs dargestellt (F_{BP}(t)). Die Widerstandkraft F_{BP} ergibt sich aus der Summe der innerhalb des Fußbremsventils 48 erzeugten Widerstandskräfte und der mittels des Fußbremsaktuators 52 eingesteuerten Rückstellkraft. Der Bremsvorgang beginnt zum Zeitpunkt t0 mit einer Betätigung des Bremspedals 46 durch den Fahrer, wobei das Kraftfahrzeug 2 zunächst nur durch die als Generator betriebene Elektromaschine 24 verzögert wird. Zum Zeitpunkt t1 wird der Retarder 44 zugeschaltet, welches dem Fahrer durch ein haptisch wahrnehmbares Signalkraft S1 in Form einer impulsförmigen Erhöhung der Rückstellkraft mit der Stärke H1 und der Dauer T1 angezeigt wird.

Danach wird das Bremsmoment der Elektromaschine 24 kontinuierlich reduziert und das Bremsmoment des Retarders 44 entsprechend erhöht, bis die Elektromaschine 24 zum Zeitpunkt t2 vollständig abgeschaltet wird. Das Abschalten der Elektromaschine 24 wird dem Fahrer durch eine haptisch wahrnehmbare Signalkraft S2 in Form einer doppelimpulsförmigen Erhöhung der Rückstellkraft mit der Stärke H2 und der Dauer T2 mitgeteilt. Vorliegend ist beispielhaft die Stärke H2 der zweiten Signalkraft S2 erkennbar geringer als die Stärke H1 der ersten Signalkraft S1 und die Dauer T2 der zweiten Signalkraft S2 größer als die Dauer T1 der ersten Signalkraft S1 (H2 < H1, T2 > T1). Das Abschalten der Elektromaschine 24 und das Zuschalten des Retarders 44 kann beispielsweise dadurch erforderlich sein, dass der elektrische Energiespeicher 32 weitgehend geladen ist und/oder die Elektromaschine 24 ihre Überhitzungsgrenze erreicht hat.

Zum Zeitpunkt t3 wird die Betriebsbremsanlage 38 mit den Reibungsbremsen 40a, 40b, 42a, 42b zugeschaltet, welches dem Fahrer durch eine haptisch wahrnehmbare Signalkraft S3 in Form einer als Vibration spürbaren, mehrere Schwingungen der Rückstellkraft umfassenden Schwingungssequenz mit der Amplitude A1, der Frequenz f1 und der Dauer T3 angezeigt wird. Danach wird das Bremsmoment des Retarders 44 kontinuierlich reduziert und das Bremsmoment der Reibungsbremsen 40a, 40b, 42a, 42b durch eine Erhöhung des eingesteuerten Bremsdruckes entsprechend vergrößert, bis der Retarder 44 zum Zeitpunkt t4 vollständig abgeschaltet wird.

Das Abschalten des Retarders 44 wird dem Fahrer durch eine haptisch wahrnehmbare Signalkraft S4 in Form einer als Vibration spürbaren, mehrere Schwingungen der Rückstellkraft umfassende Schwingungssequenz mit der Amplitude A2, der Frequenz f2 und der Dauer T4 mitgeteilt.

Vorliegend ist beispielhaft die Amplitude A2 der vierten Signalkraft S4 größer als die Amplitude A1 der dritten Signalkraft S3, die Frequenz f2 der vierten Signalkraft S4 kleiner als die Frequenz f1 der dritten Signalkraft S3 und die Dauer T4 der vierten Signalkraft S4 kleiner als die Dauer T3 der dritten Signalkraft S3 (A2 > A1, f2 < f1, T4 < T3). Das Abschalten des Retarders 44 und das Zuschalten der Betriebsbremsanlage 38 kann zum Beispiel dadurch erforderlich sein, dass der Retarder 44 aufgrund einer reduzierten Fahrgeschwindigkeit des Kraftfahrzeugs 2 kein nutzbares Bremsmoment mehr erzeugen kann und/oder seine Überhitzungsgrenze erreicht hat.

Durch die mittels des Triebelements 53 am Bremspedalaktuator 52 in das Bremspedal 46 eingesteuerten, die Rückstellkraft überlagernden Signalkräfte S1, S2, S3, S4 wird der Fahrer über die jeweiligen Vorgänge zur Verteilung der Bremskraft, wie das Zuschalten des Retarders 44 oder der Betriebsbremsanlage 38 oder das Abschalten der Elektromaschine 24 oder des Retarders 44, informiert, ohne dafür den Blick von dem vor ihm liegenden Verkehrsraum nehmen zu müssen. Durch die unterschiedliche Ausführung der Signalkräfte S1, S2, S3, S4 sind die jeweiligen Zuschaltvorgänge und Abschaltvorgänge eindeutig identifizierbar. Sofern keine Notbremsung vorliegt, kann der Fahrer die Aufteilung der Bremskraft auf die Komponenten 24, 38, 44 der Bremsanlage 38 über eine Betätigung des Bremspedals 46 beeinflussen, zum Beispiel indem er durch ein teilweises Loslassen des Bremspedals 46 eine Rückkehr zu der vorhergehenden Aufteilung der Bremskraft bewirkt.

### Bezugszeichenliste (Teil der Beschreibung)

- 2: Kraftfahrzeug, Nutzfahrzeug
- 4: Fahrzeugachse, Vorderachse
- 6a, 6b: Räder an der Vorderachse
- 8: Fahrzeugachse, Hinterachse
- 10a, 10a': Räder an der Hinterachse rechte Fahrzeugseite
- 10b, 10b': Räder an der Hinterachse linke Fahrzeugseite
- 12: Verbrennungsmotor
- 14: Trennkupplung
- 16: Schaltgetriebe
- 18: Kardanwelle
- 20: Achsdifferential an der Hinterachse
- 22a, 22b: Antriebswellen an der Hinterachse
- 24: Elektromaschine
- 26: Triebwelle
- 28: Achsdifferential an der Vorderachse
- 30a, 30b: Antriebswellen an der Vorderachse
- 32: Energiespeicher, Batterie
- 34: Bremsanlage
- 36: Elektronisches Steuergerät
- 38: Betriebsbremsanlage
- 40a, 40b: Radbremsen, Reibungsbremsen an der Vorderachse
- 42a, 42b: Radbremsen, Reibungsbremsen an der Hinterachse
- 44: Dauerbremsanlage, Retarder
- 46: Bremspedal
- 48: Fußbremsventil
- 50: Bremswertgeber, Stellwegsensor
- 52: Bremspedalaktuator
- 53: Triebelement am Bremspedalaktuator
- 54: Erste Steuerleitung
- 56: Druckluftversorgungseinrichtung
- 58: Erster Bremskreis
- 60: Zweiter Bremskreis
- 62: Kompressor
- 64: Druckregler
- 66: Mehrkreisschutzventil
- 68: Erste Vorratsleitung
- 70: Erster Druckspeicher
- 72: Erste Achsbremsleitung
- 74: Erstes Achsventilmodul
- 76a, 76b: Radbremsleitungen
- 78: Zweite Sensorleitung
- 80: Dritte Steuerleitung
- 82: Zweite Vorratsleitung
- 84: Zweiter Druckspeicher
- 86: Zweite Achsbremsleitung
- 88: Zweites Achsventilmodul
- 90a, 90b: Radbremsleitungen
- 92: Vierte Steuerleitung
- 94: Fünfte Steuerleitung
- 96: Sechste Steuerleitung
- A1: Amplitude der Signalkraft S3
- A2: Amplitude der Signalkraft S4
- ECU: Elektronisches Steuergerät
- f1: Frequenz der Signalkraft S3
- f2: Frequenz der Signalkraft S4
- F_{BP}: Widerstandskraft
- H1: Stärke der Signalkraft S1
- H2: Stärke der Signalkraft S2
- S1: Signalkraft, Rückstellkrafterhöhung
- S2: Signalkraft, Rückstellkrafterhöhung
- S3: Signalkraft, Schwingungssequenz
- S4: Signalkraft, Schwingungssequenz
- t: Zeit
- t0: Zeitpunkt, Startzeitpunkt
- t1: Erster Zeitpunkt
- T1: Dauer der Signalkraft S1
- t2: Zweiter Zeitpunkt
- T2: Dauer der Signalkraft S2
- t3: Dritter Zeitpunkt
- T3: Dauer der Signalkraft S3
- t4: Vierter Zeitpunkt
- T4: Dauer der Signalkraft S4

## Patentansprüche

1. Bremsanlage (23) eines Kraftfahrzeugs (2), welches eine Betriebsbremsanlage (38) mit druckmittelbetätigbaren Reibungsbremsen (40a, 40b, 42a, 42b), eine Dauerbremsanlage (44), ausgebildet als hydrodynamischer oder elektrodynamischer Retarder, mindestens eine mit den Rädern (6a, 6b) an einer Fahrzeugachse (4) in Triebverbindung stehende, zumindest als Generator betreibbare Elektromaschine (24), sowie ein mittels eines Bremspedals (46) betätigbares Fußbremsventil (48) aufweist, wobei das Fußbremsventil (48) einen Bremswertgeber (50) und einen Bremspedalaktuator (52) zur Erzeugung einer auf das Bremspedal (46) wirkenden Rückstellkraft aufweist, und bei dem die genannten Komponenten (24, 38, 44) der Bremsanlage (23) mittels eines elektronischen Steuergeräts (36) steuerbar sind, wobei der Bremskraftbedarf priorisiert in der Reihenfolge von der Elektromaschine (24) im Generatorbetrieb, von dem Retarder (44) und von der Betriebsbremsanlage (38) angefordert wird, und wobei die Aufteilung der Bremskraft auf die Komponenten (24, 38, 44) der Bremsanlage (23) einem Fahrer des Kraftfahrzeugs (2) in geeigneter Weise mitteilbar ist, **dadurch gekennzeichnet, dass** der Bremspedalaktuator (52) elektrisch wirksam ausgebildet ist und ein drehbares oder axial verschiebbares Triebelement (53) aufweist, und dass das Triebelement (53) des Bremspedalaktuators (52) unmittelbar oder mittelbar mit einem Bremshebel des Bremspedals (46) oder mit einem Stößelkolben des Fußbremsventils (48) in Stellverbindung ist.

2. Bremsanlage nach Anspruch 1, **dadurch gekennzeichnet, dass** der Bremspedalaktuator (52) als ein Elektromotor mit einer drehbaren Rotorwelle ausgebildet ist, und dass die Rotorwelle des Elektromotors über ein Spindelgetriebe unmittelbar oder mittelbar mit dem Bremshebel des Bremspedals (46) oder mit dem Stößelkolben des Fußbremsventils (48) in Stellverbindung ist.

3. Bremsanlage nach Anspruch 1, **dadurch gekennzeichnet, dass** der Bremspedalaktuator (52) als ein Elektromagnet mit einem axial verschiebbaren Anker ausgebildet ist, und dass der Anker des Elektromagneten unmittelbar oder mittelbar mit dem Bremshebei des Bremspedals (46) oder mit dem Stößelkolben des Fußbremsventils (48) in Stellverbindung ist.

4. Bremsanlage nach einem der Ansprüche 1 bis 3, wobei der Bremskraftbedarf mittels einer Auslenkung des Bremspedals (46) signalisiert ist.

5. Verfahren zur Steuerung einer Bremsanlage (34) eines Kraftfahrzeugs (2), welches eine Betriebsbremsanlage (38) mit druckmittelbetätigbaren Reibungsbremsen (40a, 40b, 42a, 42b), eine Dauerbremsanlage (44), ausgebildet als hydrodynamischer oder elektrodynamischer Retarder, mindestens eine mit den Rädern (6a, 6b) an einer Fahrzeugachse (4) in Triebverbindung stehende, zumindest als Generator betreibbare Elektromaschine (24), sowie ein mittels eines Bremspedals (46) betätigbares Fußbremsventil (48) aufweist, wobei das Fußbremsventil (48) einen Bremswertgeber (50) und einen Bremspedalaktuator (52) zur Erzeugung einer auf das Bremspedal (46) wirkenden Rückstellkraft aufweist, und bei dem die genannten Komponenten (24, 38, 44) der Bremsanlage (34) mittels eines elektronischen Steuergeräts (36) steuerbar sind, wobei der Bremskraftbedarf priorisiert in der Reihenfolge von der Elektromaschine (24) im Generatorbetrieb, von dem Retarder (44) und von der Betriebsbremsanlage (38) befriedigt wird, und wobei die Aufteilung der Bremskraft auf die Komponenten (24, 38, 44) der Bremsanlage (34) einem Fahrer des Kraftfahrzeugs (2) in geeigneter Weise mitgeteilt wird, **dadurch gekennzeichnet, dass** bei mindestens einer Änderung der Aufteilung der Bremskraft auf die Komponenten (24, 38, 44) der Bremsanlage (34) mittels des Bremspedalaktuators (52) die auf das Bremspedal (46) wirkende Rückstellkraft kurzzeitig mit einer haptisch wahrnehmbaren Signalkraft (S1, S2, S3, S4) überlagert wird.

6. Verfahren nach Anspruch 5, **dadurch gekennzeichnet, dass** bei der Zuschaltung oder der Abschaltung wenigstens einer der Komponenten (24, 38, 44) der Bremsanlage (34) mittels des Bremspedalaktuators (52) die auf das Bremspedal (46) wirkende Rückstellkraft kurzzeitig mit einer haptisch wahrnehmbaren Signalkraft (S1, S2, S3, S4) überlagert wird.

7. Verfahren nach Anspruch 5 oder 6, **dadurch gekennzeichnet, dass** die die Rückstellkraft verändernde Signalkraft (S1, S2) als mindestens eine impulsförmige Erhöhung der Rückstellkraft wirksam ist.

8. Verfahren nach Anspruch 7, **dadurch gekennzeichnet, dass** sich die bei unterschiedlichen Änderungen der Aufteilung der Bremskraft eingesteuerten impulsförmigen Signalkräfte (S1, S2) hinsichtlich ihrer Anzahl und/oder Stärke (H1, H2) und/oder Dauer (T1, T2) voneinander unterscheiden.

9. Verfahren nach einem der Ansprüche 5 bis 8, **dadurch gekennzeichnet, dass** die Signalkraft (S3, S4) in Form einer am Bremspedal (46) als Vibration spürbaren, mehrere Schwingungen der Rückstellkraft umfassenden Schwingungssequenz eingesteuert wird.

10. Verfahren nach Anspruch 9, **dadurch gekennzeichnet, dass** sich die bei unterschiedlichen Änderungen der Aufteilung der Bremskraft eingesteuerten Schwingungssequenzen hinsichtlich ihrer Frequenz (f1, f2) und/oder Amplitude (A1, A2) und/oder Dauer (T3, T4) voneinander unterscheiden.

11. Verfahren nach einem der Ansprüche 5 bis 10, **dadurch gekennzeichnet, dass** der Bremskraftbedarf mittels einer Auslenkung des Bremspedals (46) signalisiert ist.

## Claims

1. Brake system (23) of a motor vehicle (2), which comprises a service brake system (38) having friction brakes (40a, 40b, 42a, 42b) which can be actuated by a pressure medium, a sustained-action brake system (44), designed as a hydrodynamic or electrodynamic retarder, at least one electric machine (24) which is drivingly connected to the wheels (6a, 6b) on a vehicle axle (4) and can be operated at least as a generator, and a foot brake valve (48) which can be actuated by means of a brake pedal (46), wherein the foot brake valve (48) has a brake value transmitter (50) and a brake pedal actuator (52) for generating a restoring force acting on the brake pedal (46), and in which said components (24, 38, 44) of the brake system (23) can be controlled by means of an electronic control device (36), wherein the braking force requirement is requested, in the order of priority, by the electric machine (24) in generator mode, the retarder (44) and the service brake system (38), and wherein the distribution of the braking force between the components (24, 38, 44) of the brake system (23) can be suitably communicated to a driver of the motor vehicle (2), **characterized in that** the brake pedal actuator (52) is designed to be electrically effective and has a rotatable or axially movable drive element (53), **and in that** the drive element (53) of the brake pedal actuator (52) is directly or indirectly connected in an actuating manner to a brake lever of the brake pedal (46) or to a plunger piston of the foot brake valve (48).

2. Brake system according to claim 1, **characterized in that** the brake pedal actuator (52) is designed as an electric motor having a rotatable rotor shaft, **and in that** the rotor shaft of the electric motor is directly or indirectly connected in an actuating manner to the brake lever of the brake pedal (46) or to the plunger piston of the foot brake valve (48) via a spindle gear.

3. Brake system according to claim 1, **characterized in that** the brake pedal actuator (52) is designed as an electromagnet having an axially movable armature, **and in that** the armature of the electromagnet is directly or indirectly connected in an actuating manner to the brake lever of the brake pedal (46) or to the plunger piston of the foot brake valve (48).

4. Brake system according to any of claims 1 to 3, wherein the braking force requirement is signaled by means of a deflection of the brake pedal (46).

5. Method for controlling a brake system (34) of a motor vehicle (2), which has a service brake system (38) having friction brakes (40a, 40b, 42a, 42b) which can be actuated by a pressure medium, a sustained-action braking system (44), designed as a hydrodynamic or electrodynamic retarder, at least one electric machine (24) which is drivingly connected to the wheels (6a, 6b) on a vehicle axle (4) and can be operated at least as a generator, and a foot brake valve (48) which can be actuated by means of a brake pedal (46), wherein the foot brake valve (48) has a brake value transmitter (50) and a brake pedal actuator (52) for generating a restoring force acting on the brake pedal (46), and in which said components (24, 38, 44) of the brake system (34) can be controlled by means of an electronic control device (36), wherein the braking force requirement is satisfied, in order of priority, by the electric machine (24) in generator mode, the retarder (44) and the service brake system (38), and wherein the distribution of the braking force between the components (24, 38, 44) of the brake system (34) is suitably communicated to a driver of the motor vehicle (2), **characterized in that** in the case of at least one change in the distribution of the braking force between the components (24, 38, 44) of the brake system (34) by means of the brake pedal actuator (52), the restoring force acting on the brake pedal (46) is briefly overlaid with a haptically perceptible signaling force (S1, S2, S3, S4).

6. Method according to claim 5, **characterized in that** when at least one of the components (24, 38, 44) of the brake system (34) is activated or deactivated by means of the brake pedal actuator (52), the restoring force acting on the brake pedal (46) is briefly overlaid with a haptically perceptible signaling force (S1, S2, S3, S4).

7. Method according to either claim 5 or claim 6, **characterized in that** the signaling force (S1, S2) that changes the restoring force acts as at least one pulsed increase in the restoring force.

8. Method according to claim 7, **characterized in that** the pulsed signaling forces (S1, S2) that are activated in the case of different changes in the distribution of the braking force differ from one another in terms of their number and/or strength (H1, H2) and/or duration (T1, T2).

9. Method according to any of claims 5 to 8, **characterized in that** the signaling force (S3, S4) is applied in the form of a oscillation sequence which comprises a plurality of oscillations of the restoring force and which can be perceived as a vibration on the brake pedal (46).

10. Method according to claim 9, **characterized in that** the oscillation sequences applied in the case of different changes in the distribution of the braking force differ from one another in terms of their frequency (f1, f2) and/or amplitude (A1, A2) and/or duration (T3, T4).

11. Method according to any of claims 5 to 10, **characterized in that** the braking force requirement is signaled by means of a deflection of the brake pedal (46).

## Revendications

1. Système de freinage (23) d'un véhicule automobile (2) qui comprend un système de freinage de service (38) comportant des freins à friction (40a, 40b, 42a, 42b) pouvant être actionnés par un fluide sous pression, un système de freinage continu (44), réalisé sous la forme d'un ralentisseur hydrodynamique ou électrodynamique, au moins une machine électrique (24) pouvant fonctionner au moins comme un générateur et en liaison avec entraînement avec les roues (6a, 6b) au niveau d'un essieu de véhicule (4), ainsi qu'une soupape de frein à pied (48) pouvant être actionnée au moyen d'une pédale de frein (46), dans lequel la soupape de frein à pied (48) présente un transmetteur de valeur de freinage (50) et un actionneur de pédale de frein (52) pour générer une force de rappel agissant sur la pédale de frein (46), et dans lequel les composants (24, 38, 44) mentionnés du système de freinage (23) peuvent être commandés au moyen d'un appareil de commande électronique (36), dans lequel le besoin en force de freinage est demandée en priorité, dans l'ordre, par la machine électrique (24) dans le mode de fonctionnement de générateur, par le ralentisseur (44) et par le système de freinage de service (38), et dans lequel la répartition de la force de freinage entre les composants (24, 38, 44) du système de freinage (23) peut être communiquée de manière appropriée à un conducteur du véhicule automobile (2), **caractérisé en ce que** l'actionneur de pédale de frein (52) est réalisé de manière électriquement efficace et présente un élément d'entraînement (53) rotatif ou déplaçable axialement, **et en ce que** l'élément d'entraînement (53) de l'actionneur de pédale de frein (52) est en liaison de réglage directement ou indirectement avec un levier de frein de la pédale de frein (46) ou avec un piston poussoir de la soupape de frein à pied (48).

2. Système de freinage selon la revendication 1, **caractérisé en ce que** l'actionneur de pédale de frein (52) est réalisé sous la forme d'un moteur électrique comportant un arbre de rotor rotatif, **et en ce que** l'arbre de rotor du moteur électrique est en liaison de réglage directement ou indirectement avec le levier de frein de la pédale de frein (46) ou avec le piston poussoir de la soupape de frein à pied (48) par l'intermédiaire d'un engrenage à broche.

3. Système de freinage selon la revendication 1, **caractérisé en ce que** l'actionneur de pédale de frein (52) est réalisé sous la forme d'un électroaimant comportant un induit déplaçable axialement, **et en ce que** l'induit de l'électroaimant est en liaison de réglage directement ou indirectement avec le levier de frein de la pédale de frein (46) ou avec le piston poussoir de la soupape de frein à pied (48).

4. Système de freinage selon l'une des revendications 1 à 3, dans lequel le besoin en force de freinage est signalé au moyen d'un débattement de la pédale de frein (46).

5. Procédé pour la commande d'un système de freinage (34) d'un véhicule automobile (2) qui présente un système de freinage de service (38) comportant des freins à friction (40a, 40b, 42a, 42b) pouvant être actionnés par un fluide sous pression, un système de freinage continu (44), réalisé sous la forme d'un ralentisseur hydrodynamique ou électrodynamique, au moins une machine électrique (24) pouvant fonctionner au moins comme un générateur et en liaison avec entraînement avec les roues (6a, 6b) au niveau d'un essieu de véhicule (4), ainsi qu'une soupape de frein à pied (48) pouvant être actionnée au moyen d'une pédale de frein (46), dans lequel la soupape de frein à pied (48) présente un transmetteur de valeur de freinage (50) et un actionneur de pédale de frein (52) pour générer une force de rappel agissant sur la pédale de frein (46), et dans lequel les composants (24, 38, 44) mentionnés du système de freinage (34) peuvent être commandés au moyen d'un appareil de commande électronique (36), dans lequel le besoin en force de freinage est satisfait en priorité, dans l'ordre, par la machine électrique (24) dans le mode de fonctionnement de générateur, par le ralentisseur (44) et par le système de freinage de service (38), et dans lequel la répartition de la force de freinage entre les composants (24, 38, 44) du système de freinage (34) est communiquée de manière appropriée à un conducteur du véhicule automobile (2),
**caractérisé en ce que,** lors d'au moins une modification de la répartition de la force de freinage entre les composants (24, 38, 44) du système de freinage (34) au moyen de l'actionneur de pédale de frein (52), la force de rappel agissant sur la pédale de frein (46) est superposée brièvement à une force de signalisation (S1, S2, S3, S4) perceptible au toucher.

6. Procédé selon la revendication 5, **caractérisé en ce que,** lors de l'activation ou de la désactivation d'au moins l'un des composants (24, 38, 44) du système de freinage (34) au moyen de l'actionneur de pédale de frein (52), la force de rappel agissant sur la pédale de frein (46) est superposée brièvement à une force de signalisation (S1, S2, S3, S4) perceptible au toucher.

7. Procédé selon la revendication 5 ou 6, **caractérisé en ce que** la force de signalisation (S1, S2) modifiant la force de rappel agit comme au moins une augmentation en forme d'impulsion de la force de rappel.

8. Procédé selon la revendication 7, **caractérisé en ce que** les forces de signalisation (S1, S2) en forme d'impulsions, introduites lors de différentes modifications de la répartition de la force de freinage, se distinguent les unes des autres en ce qui concerne leur nombre et/ou leur intensité (H1, H2) et/ou leur durée (T1, T2).

9. Procédé selon l'une des revendications 5 à 8, **caractérisé en ce que** la force de signalisation (S3, S4) est introduite sous la forme d'une séquence d'oscillations comprenant plusieurs oscillations de la force de rappel et perceptible sur la pédale de frein (46) sous forme de vibration.

10. Procédé selon la revendication 9, **caractérisé en ce que** les séquences d'oscillations introduites lors de différentes modifications de la répartition de la force de freinage se distinguent les unes des autres en ce qui concerne leur fréquence (f1, f2) et/ou leur amplitude (A1, A2) et/ou leur durée (T3, T4).

11. Procédé selon l'une des revendications 5 à 10, **caractérisé en ce que** le besoin en force de freinage est signalé au moyen d'un débattement de la pédale de frein (46).
